# EUROPÄISCHE PATENTSCHRIFT

(11) **EP 0 716 097 B1**
(45) Veröffentlichungstag und Bekanntmachung des Hinweises auf die Patenterteilung: **15.04.1998**
(21) Anmeldenummer: 95100273.2
(22) Anmeldetag: 10.01.1995
(51) Int. Cl.: C08F 2/44, C08F 265/06

(54) **Giessmasse**
Molding compound
Composé de moulage

(30) Priorität: 23.11.1994 DE 4441691
(43) Veröffentlichungstag der Anmeldung: 12.06.1996
(73) Patentinhaber: Blanco GmbH & Co. KG, D-75038 Oberderdingen (DE); Schock & Co. GmbH, D-73614 Schorndorf (DE)
(72) Erfinder: Harke, Stefan, D-74889 Sinsheim-Rohrbach (DE); Grathwohl, Stefanie, D-75447 Sternenfels (DE); Hock, Klaus, D-94209 Regen (DE); Paternoster, Rudolf, D-94269 Rinchnach (DE); Fenzl, Werner, D-94209 Regen (DE); Fenten, Norbert, D-50189 Elsdorf (DE)
(74) Vertreter: Hoeger, Stellrecht & Partner

(56) Entgegenhaltungen:
- WO-A-93/10182
- DE-A- 4 304 494

## Beschreibung

Die Erfindung betrifft eine Gießmasse, enthaltend einen aushärtbaren Sirup, welcher ein flüssiges Monomeres und gegebenenfalls darin gelöste Polymeranteile umfaßt, und einen anorganischen Füllstoff, welcher ein Quarzsandprodukt umfaßt.

Solche Gießmassen sind im Stand der Technik, z.B. aus der DE-A-24 49 656 bekannt. Die Gießmassen werden u.a. eingesetzt zur Herstellung von Kunststofformteilen für den Sanitär- oder Küchenbereich, insbesondere für Küchenspülen, Arbeitsplatten und Sanitärteile, wie z.B. Badewannen oder Duschtassen.

Aus der DE-A-43 04 494 sind solche Gießmassen bekannt, bei denen als Füllstoff neben recyceltem Kunststoffmaterial Quarzsand und Cristobalitmehl gleichzeitig Verwendung finden.

Zur Herstellung weißer Formkörper aus solchen Gießmassen, die zudem kratzfest sein sollen, wird ein möglichst hoher Volumenanteil an harten, grobkörnigen Füllstoffen eingesetzt. Bevorzugt wird dabei ein Cristobalit-Sand mit einer Korngrößenverteilung im Bereich von 200 bis 500 µm bei Füllstoffkonzentrationen des Formteils von ca. 62 Gew. %. Mit der Verwendung von α-Cristobalit (Tieftemperaturmodifikation) als Füllstoff erreicht man zwar einerseits einen sehr hohen Weißgrad bei einer Einbettung des Füllstoffs in Polymethylmethacrylat (im folgenden PMMA), welcher u.a. auf den sehr günstigen Brechungsindex des Cristobalit-Sandes im Hinblick auf die PMMA-Matrix zurückgeht.

Nachteilig bei der Verwendung von α-Cristobalit-Sand ist andererseits jedoch der relativ große Ausdehnungskoeffizient dieses anorganischen Füllstoffs sowie dessen Porosität, welche im Sirup der Gießmasse im gießfähigen Zustand sehr schnell flüssiges Monomeres entzieht und damit zu einem vorzeitigen Eindicken der Gießmasse führt.

Dies führt nicht nur zu einer schwierigen Handhabung der Gießmasse, d.h. die Standzeit der fertig abgemischten Gießmasse ist relativ kurz, und einer durch den Verdickungseffekt sich sehr schnell verschlechternde Gießbarkeit der Masse, sondern darüber hinaus ergibt sich aufgrund des hohen Ausdehnungskoeffizienten des α-Cristobalit-Sandes eine ausgeprägte Rißbildungstendenz bei Temperaturwechselbelastung in den fertigen Formteilen. Dies ist besonders problematisch, da gerade die Formteile für den Küchen- und Sanitärbereich häufigen Temperaturwechseln unterliegen, beispielsweise, wenn nacheinander heißes und kaltes Wasser auf die Formteile gelangt.

Da weiße Formteile, wie z.B. Küchenspülen oder Badewannen im Küchen- und Badbereich immer noch einen sehr hohen Stellenwert besitzen, ist es wünschenswert, eine Gießmasse für die Herstellung weißer Formkörper zur Verfügung zu haben, welche sich einfacher handhaben läßt als die aus dem Stand der Technik bekannte, welche jedoch andererseits einen vergleichbaren Weißgrad aufweist.

Diesem Bedürfnis wird mit einer Gießmasse der eingangs beschriebenen Art abgeholfen, indem diese erfindungsgemäß ein Quarzsandprodukt enthält, dessen einzelnes Korn im Kern im wesentlichen aus Quarz und an der Oberfläche im wesentlichen aus α-Cristobalit besteht.

Erstaunlicherweise zeigt sich, daß beim Einsatz solcher Quarzsand-Produkte als anorganischer Füllstoff zunächst einmal eine Stabilität der Dispersion der Gießmasse erreicht werden kann, die eine Verarbeitung im Zeitraum von 72 Stunden und wesentlich darüber hinaus erlaubt, ohne daß die Gießmasse in diesem Zeitraum nennenswerte Verdickungsneigung zeigt.

Darüber hinaus sind aus solchen Gießmassen Formkörper erhältlich, die aufgrund der erfindungsgemäßen Auswahl des Füllstoffs, der immer noch zu großen Teilen aus Quarzmaterial mit einem niedrigen Ausdehnungskoeffizienten besteht, eine gute Rißbeständigkeit bei Temperaturwechselbelastung aufweisen.

Das verwendete erfindungsgemäße Quarzsand-Produkt weist darüber hinaus einen vergleichbaren Weißgrad mit dem α-Cristobalit-Sand auf, hat eine hohe Farbneutralität und zeigt auch eine gute Fleckfestigkeit nach Abrasivbeanspruchung. Diese Eigenschaften sind insbesondere beim Einsatz der Gießmassen zur Herstellung von Formteilen für den Küchenbereich von Bedeutung, wo abrasive Beanspruchungen, z.B. der Küchenspülen oder Arbeitsplatten, in großem Maße vorkommen, und das Fehlen dieser positiven Eigenschaften kann sehr schnell zu einem verschmutzten Aussehen des Formteils führen. Dies ist der Marktakzeptanz für solche Produkte in hohem Maße abträglich.

Das erfindungsgemäß eingesetzte Quarzsand-Produkt besteht, wie oben erwähnt, also nicht durchgehend massiv aus α-Cristobalit, sondern hat nur an der Oberfläche des Korns eine Schicht aus α-Cristobalit und besteht im Inneren nach wie vor aus Quarz.

Vorzugsweise weist das Quarzsand-Produkt einen Umwandlungsgrad auf, bei dem das von außen zugängliche Kapillar-und Porenvolumen auf einen Wert beschränkt bleibt, der einer Wasseraufnahme von 40 g pro 100 g Quarzsand-Produkt oder weniger entspricht.

Bei der Herstellung von α-Cristobalit wird β-Quarz, üblicherweise unter Verwendung von Mineralisatoren, z.B. einwertigen Kationen wie Na⁺, oberhalb von 1450° C in α-Cristobalit umgewandelt. Die Mineralisatoren wirken sich günstig auf die Strukturumwandlung des β-Quarzes aus, und die Umwandlung erfolgt durch das gesamte Volumen des Quarzkorns hindurch und erfordert üblicherweise eine Verweilzeit bei 1500° C von ca. 5 Stunden.

Bei der Bildung des α-Cristobalits auf diese Weise erhält man eine drastische Verringerung der Dichte des körnigen Materials von etwa 2,65 g/cm³ des β-Quarzes auf ca. 2,35/cm³ des neu gebildeten α-Cristobalits. Bildlich gesprochen, kann man feststellen, daß das Material gewissermaßen aufquillt, wobei hierdurch die Quarzsandkörner zu splittrigen Fragmenten reißen bzw. im Falle, daß ein Korn nicht reißt, zumindest in das Innere der Körner führende Rißstrukturen entstehen, die den Körnern eine schrundige, zerklüftete Oberfläche verleihen. Das Material wird hierdurch porös und nimmt bei der Verwendung als Füllstoff in den eingangs beschriebenen Gießmassen flüssiges Monomeres auf, was zu einer Verdickung der Gießmasse führt.

Die mit einer Verringerung der Dichte bzw. Erhöhung des spezifischen Volumens einhergehende Umwandlung des Quarzmaterials findet bei dem erfindungsgemäß eingesetzten Quarzsand-Produkt nur an der Oberfläche statt, dort allerdings weitgehend quantitativ als echte Strukturänderung, während der Kern praktisch unverändert als Quarz erhalten bleibt. Dadurch werden an der Oberfläche Zugspannungen vermieden, die bei einer massiven Umwandlung bis in den Kern hinein nicht ausbleiben können, wenn die Umwandlung von außen nach innen fortschreitet und die spezifische Volumenvergrößerung im Inneren die schon umgewandelten äußeren Schichten weiter auseinanderzutreiben bestrebt ist.

Erfindungsgemäß wird ein Quarzsand-Produkt eingesetzt, bei dem sich die Dichte oder das spezifische Volumen des Kerns des einzelnen Korns nicht ändert, und die Strukturänderung in den Oberflächenbereichen führt allenfalls dort zu Druckspannungen, welche aber im allgemeinen keine Rißbildung verursachen.

Darüber hinaus bleibt bei der Herstellung des erfindungsgemäß einzusetzenden Quarzsand-Produktes die gerundete Oberflächenstruktur des Quarzsandes im wesentlichen erhalten, was eine optimale Füllstoffunktion ebenso begründet wie die reinweiße Farbe des Produkts. Dadurch weist das erfindungsgemäß einzusetzende Quarzsand-Produkt im Hinblick auf den hohen Weißgrad die Vorteile des α-Cristobalits auf, ohne jedoch dessen Nachteile in Gestalt der stark gestörten Oberfläche oder des größeren Ausdehnungskoeffizienten mit sich zu bringen.

Als Füllstoffe bevorzugte Quarzsand-Produkte weisen einen Anteil des α-Cristobalits am Gesamtkorn von im Mittel ca. 1 bis 25 Gew. %, weiter bevorzugt 3 bis 15 Gew. %, beispielsweise ca. 10 Gew. % auf.

Bevorzugt wird bei der Herstellung des erfindungsgemäß zu verwendenden Quarzsand-Produktes darauf geachtet, daß die Kornoberfläche weitgehend unversehrt glatt bleibt. Mit dieser bevorzugten Ausbildung des Quarzsand-Produktes wird nicht nur eine Störung der Gießfestigkeit des mit dem Füllstoff gemischten Sirups weitestgehend minimiert und dessen Gießfähigkeit für verhältnismäßig lange Zeiträume stabilisiert, sondern es wird zudem noch die Fleckfestigkeit verbessert, da die an der Oberfläche liegende oder durch Kratzen an die Oberfläche gelangende Kornoberfläche nur eine minimale Aufnahmekapazität für färbende Flüssigkeiten, wie z.B. Tee, Kaffee oder verschiedene Säfte aufweist.

Bevorzugt wird das Quarzsand-Produkt mit einer für Gießmassen relativ groben Korngrößenverteilung mit einem Schwerpunkt im Bereich von ca. 100 µm bis ca. 500 µm verwendet. Diese Auswahl der Korngrößenverteilung wird im Hinblick auf die erwünschte Kratzfestigkeit eines aus der Gießmasse hergestellten Formteils getroffen.

Bevorzugt wird ein Quarzsand-Produkt, welches in im wesentlichen ungebrochener Kornform vorliegt. Dies verbessert erneut die Fleckfestigkeit der fertigen Formteile, die aus der erfindungsgemäßen Gießmasse hergestellt sind.

Bevorzugt wird ein Quarzsand-Produkt mit einem Weißgrad von > 60, gemessen als L-Wert nach DIN 55 981 gegen und bezogen auf den vorgeschriebenen Weißstandard. Für Cristobalit-Sand erhält man einen L-Wert von ca. 80. Weiter bevorzugt sind Quarzsand-Produkte, welche gemessen nach DIN 55981 einen a-Wert von betragsmäßig ≤ 0,6, vorzugsweise ≤ 0,2, einen b-Wert von betragsmäßig ≤ 2,0, vorzugsweise ≤ 1,2, und damit einen Farbstich aufweisen, der als s-Wert ca. 2 oder weniger, vorzugsweise ca. 1,2 oder weniger, beträgt. Geringe Abweichungen von der Farbe "Reinweiß" lassen sich mit Zugaben geringer Mengen eines üblichen Weißpigmentes in der Gießmasse (z.B. TiO₂, beispielsweise Type 2200 der Firma Kronos Titan, Leverkusen) überdecken und so das Kunststofformteil, insbesondere das PMMA-Kunststofformteil, auf den erwünschten Weißgrad bringen.

Im Hinblick auf eine gute Schlagzähigkeit der herzustellenden Formteile sowie deren verbesserte Fleckfestigkeit wird das Quarzsand-Produkt vorzugsweise in silanisierter Form eingesetzt (vgl. z.B. DE-A-23 04 602).

Bei dem Verfahren zur Herstellung der vorgenannten, erfindungsgemäß zu verwendenden Quarzsand-Produkte wird der als Ausgangsmaterial dienende α-Quarz (Tiefquarz), der oberhalb von 573° C als β-Quarz (Hochquarz) vorliegt, bei 1150 bis 1250° C Materialtemperatur in einem zur Hochtemperatur-Behandlung feinkörniger mineralischer Materialien geeigneten Ofen, z.B. einem Drehrohrofen oder einem Wirbelschichtofen, kalziniert. Über die Verweildauer kann die Schichtdicke bei der Umwandlung in α-Cristobalit gesteuert werden. Zur Förderung der Umwandlung bei der relativ niedrigen Temperatur von 1150° bis 1250° C muß Quarzsand zuvor, d.h. vor der Kalzinierung, mit einem Mineralisator versehen werden.

Die Wärmebehandlungszeit liegt, da keine durchgreifende Umwandlung in α-Cristobalit erfolgen soll, um mindestens eine Größenordnung unter den bekannten Wärmebehandlungszeiten, was im Hinblick auf den Energiebedarf naturgemäß von Vorteil ist.

Der natürliche Quarzsand enthält oft durch entsprechende mineralische, insbesondere eisenoxidhaltige Beimengungen farblich unerwünschte dunkle Partikel. Wegen der bei dem vorliegenden Verfahren niedrigeren Temperaturen werden diese Partikel nicht wie bei der vollständigen Umwandlung in α-Cristobalit aufgeschmolzen und auf diese Weise aus der verbleibenden Cristobalit-Masse entfernt. Es hat sich aber überraschenderweise gezeigt, daß die dunklen Partikel auch bei dem vorliegenden Verfahren leicht entfernt werden können, und zwar durch einen einfachen, dem Kalzinierungsvorgang nachgeschalteten Klassiervorgang. Die mineralischen Beimengungen, die die dunkle Farbe verursachen, haben nämlich gleichzeitig einen eutektischen Effekt und führen dazu, daß ein solches Korn früher anschmilzt als "saubere" Quarzkörner. In der Umgebung eines solchen dunklen Korns bilden sich daher zusammengesinterte größere Kornaggregate, die durch die Klassierung abgetrennt werden können, wodurch die Zahl der dunklen Partikel in dem Quarzsand-Produkt erheblich verringert und der Weißgrad desselben bedeutend verbessert werden können.

Das erfindungsgemäß einzusetzende Quarzsand-Produkt hat deshalb insbesondere weiterhin die Korngrößenverteilung des verwendeten Quarzsandes, d.h. des Ausgangsmaterials, und weiterhin die konturgerundete Kornform des Quarzsandes, darüber hinaus keine schrundige Oberfläche, infolge der Klassierung und Abtrennung der dunklen Partikel nur ganz wenige beeinträchtigende Dunkelstellen, infolge der oberflächlichen Cristobalit-Bildung einen hohen Weißgrad und im wesentlichen noch den insbesondere im Vergleich zu α-Cristobalit geringen thermischen Ausdehnungskoeffizienten des Quarzes.

Insbesondere ist es von Vorteil, bei der Herstellung der erfindungsgemäß einzusetzenden Quarzsand-Produkte darauf zu achten, daß durch die partielle Umwandlung des Quarzes in α-Cristobalit lediglich eine Umwandlung des einzelnen Korns in einem solchen Grad vorgenommen wird, bei dem das von außen zugängliche Kapillarvolumen und Porenvolumen möglichst klein bleibt.

Der zu verwendende anorganische Füllstoff kann einen Anteil von 40 bis 90 Gew. % an der Gießmasse aufweisen.

Dabei kann der anorganische Füllstoff insgesamt von dem erfindungsgemäßen Quarzsand-Produkt gebildet werden oder aber erstaunlicherweise zur Hälfte durch herkömmlichen α-Cristobalit-Sand ersetzt werden, wobei sämtliche positiven Eigenschaften, die durch den Einsatz des erfindungsgemäß zu verwendenden Quarzsand-Produktes für die Handhabung der Gießmasse und für die Eigenschaften des letztlich hergestellten Formteils erhalten werden, im wesentlichen im vollen Umfang erhalten bleiben.

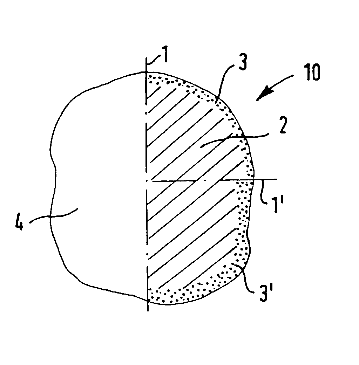

Im folgenden wird die Erfindung anhand der Zeichnung, die als einzige Figur eine schematische Darstellung eines Korns eines erfindungsgemäß in einer Gießmasse zu verwendenden Quarzsand-Produktes in teilweise geschnittener Darstellung enthält, sowie anhand der nachfolgenden Beispiele noch näher erläutert.

Das in der Figur als Ganzes mit dem Bezugszeichen 10 versehene Korn eines erfindungsgemäß zu verwendenden Quarzsand-Produktes ist rechts von der Linie 1 aufgeschnitten und läßt dort einen Kern 2 aus β-Quarz erkennen, der an der Oberfläche in schichtenförmige Bereiche 3, 3' aus α-Cristobalit umgewandelt ist. Die Umwandlung ist durch eine Kalzinierung des Quarzsandes im Drehrohrofen während etwa 15 Minuten bei einer Materialtemperatur von 1150 bis 1250° C erfolgt. Zuvor wurde der Ausgangsquarzsand mit einem Mineralisator in Gestalt einer wäßrigen oder sonstigen Lösung von Na⁺-Ionen versetzt, die sich gleichmäßig über die Kornoberfläche verteilt und die Umwandlung des bei 1150 bis 1250° C als β-Quarz vorliegenden Quarzsandes in Cristobalit bei relativ niedrigen Temperaturen beschleunigt. Über die Verweildauer des so behandelten Ausgangsquarzsandes im Drehrohrofen kann die Dicke des Bereichs 3 bzw. 3' gesteuert werden. Oberhalb der Linie 1' ist der Bereich 3 relativ dünn ausgeprägt, unterhalb der Linie 1' dicker. Es wird angestrebt, daß der Anteil des in Cristobalit umgewandelten β-Quarzes ca. 10 Gew. % beträgt, da hier einerseits ein sehr guter Weißgrad erzielt ist und andererseits soviel Kornvolumen als möglich in der Quarzmodifikation verbleibt.

Links von der Linie 1 ist die Oberfläche 4 des Korns 10 wiedergegeben, die zwar gewisse Unregelmäßigkeiten im Großen aufweißt, im übrigen aber unversehrt glatt ist und im wesentlichen keine Risse oder Schrunden erkennen läßt.

In der nachstehenden Tabelle I ist das Ergebnis von Vergleichsversuchen festgehalten, die die Vorteile des erfindungsgemäßen Quarzsand-Produktes erkennen lassen.

**Tabelle I**

| Eigenschaften | Rohsand | Erfindungsgemäßes Quarzsandprodukt | Cristobalitsand M72 |
|---|---|---|---|
| Normfarbwert Y nach DIN 5033 Pulververschüttung | 52 | 80 | 85 |
| Normfarbwert Y nach DIN 5033 PMMA-Tablette | 30 | 75 | 80 |
| Wasseraufnahme g/100 g | 28 | 35 | 50 |

| Kornverteilung | | | |
|---|---|---|---|
| > 500 µm | 1 | 4 | 3 |
| 500 - 355 µm | 5 | 6 | 12 |
| 355 - 125 µm | 93 | 89 | 86 |
| < 125 µm | 1 | 1 | 1 |

Als "Rohsand" oder Ausgangsquarzsand ist normalerweise unbehandelter Quarzsand zu verstehen. Bei dem "erfindungsgemäß zu verwendenden Quarzsandprodukt" ist an der Oberfläche die Umwandlung in α-Cristobalit vollzogen gewesen, und zwar derart, daß der Anteil des an der Oberfläche vorhandenen α-Cristobalits etwa 10 % des gesamten Quarzgewichts ausmacht. Der Anteil an α-Cristobalit an dem Kornvolumen läßt sich beispielsweise sehr einfach mit der Röntgen-Strukturanalyse als Pulverdiagramm feststellen.

Der "Cristobalit-Sand M72" ist ein in einer langen Wärmebehandlung durchgängig in α-Cristobalit umgewandeltes Produkt mit einer schrundigen, zerklüfteten Oberfläche.

Der "Normfarbwert" Y nach DIN 5033 ist eine Farbmeßzahl, die sich in der Praxis zum Vergleich verschiedener sandähnlicher Produkte hinsichtlich ihres Weißgrades als brauchbar erwiesen hat.

Zur Bestimmung der Weißgradwerte wurde eine PMMA-Tablette mit einem Füllstoffgrad von 60 Gew. % als Probenkörper hergestellt und entsprechend DIN 5033 vermessen.

Die Kornverteilung wurde in einem Alpine-Luftstrahlsieb gemessen.

Die Tabelle läßt erkennen, daß zwar der Weißgrad des erfindungsgemäßen Quarzsand-Produktes ganz erheblich über dem des normalen Quarzsandes, jedoch nur relativ wenig unter dem des Cristobalit-Sands M72 liegt. Letzterer ist zwar noch etwas weißer als das erfindungsgemäße Quarzsand-Produkt, hat aber dafür eine erheblich größere Wasseraufnahme, was durch die zerklüftete, poröse Oberfläche zustande kommt. Die Wasseraufnahme charakterisiert die Eignung des Produktes als Füllstoff, insbesondere in Kunstharzsystemen, weil sie auch ein Maß für den Bindemittelanteil ist, der dem Sirup von dem Füllstoff entzogen wird. Das erfindungsgemäße Quarzsandprodukt vereint also einen hohen Weißgrad, insbesondere in kunststoffgebundener Form, wie er vergleichbar mit dem Cristobalit-Sand M72 ist, bei einer deutlich geringeren Wasseraufnahme, verglichen mit demselben Cristobalit-Sand M72.

### Erfindungsgemäße Gießmasse

Da bei den mit den erfindungsgemäßen Gießmassen vergleichbaren Gießmassen im Stand der Technik α-Cristobalit-Sand als Füllstoff verwendet wurde, wird dort ein sehr starker und ein sehr lang anhaltender Anstieg der Viskosität der Gießmassen beobachtet, da die dort vorhandenen Spalten, Klüfte, Poren und Kapillaren ständig weiter Bindemittel aus dem Sirup aufnehmen.

Das Eindringen des Bindemittels, insbesondere des flüssigen Monomeren, ist bei diesen Gießmassen aber wichtig, damit später die erhaltenen Formteile zumindest eine gewisse Verschmutzungsfestigkeit aufweisen, indem zumindest die von kapillaren Poren der Bindemittelkörner gebildeten Hohlräume zumindest durch das Bindemittel ausgefüllt und somit verschlossen sind und hierin keine Verschmutzungen dauerhaft und einer Reinigung nicht zugänglich aufgenommen werden können.

Durch das im Stand der Technik beobachtete Ansteigen der Viskosität sind nur relativ geringe Füllgrade der Gießmassen und damit der dabei zu erhaltenden Formteile möglich, und insbesondere bei Füllgraden von 69 oder gar 72 Gew. % ist eine geregelte, reproduzierbare Verarbeitbarkeit nicht mehr gegeben.

Die erfindungsgemäße "weiße" Gießmasse dagegen führt zu kratzfesten, weißen, fleckunempfindlichen Formteilen. Diese Formteile weisen gleichzeitig eine gute Beständigkeit gegen Heiß/Kalt-Wasserwechselbelastung auf.

Die erfindungsgemäße Gießmasse zeigt darüber hinaus eine lange Standzeit, ohne daß hierbei merkliche Viskositätsveränderungen auftreten. Die Gießmasse läßt sich insbesondere mit hohem Füllgrad herstellen und dabei immer noch äußerst zuverlässig und gut verarbeiten.

Bei den erfindungsgemäßen Gießmassen wird vorzugsweise ein Füllgrad von 64 Gew. % oder mehr bevorzugt, während weiter bevorzugt Füllgrade von mindestens 70 Gew. % und besonders bevorzugt Füllgrade von 73 Gew. % sind. Selbst die Gießmassen mit Füllgraden von 73 Gew. % lassen sich gut verarbeiten, da deren Viskosität problemlos kleiner als 80 Pa*s, bevorzugt < 60 Pa*s und ganz besonders bevorzugt < 50 Pa*s, einzustellen sind. Die erfindungsgemäßen Gießmassen zeigen über mindestens eine Stunde keine Veränderung in der Viskosität, und selbst über einen Zeitraum von 4 Stunden und mehr wird keiner oder kein merklicher Viskositätsanstieg beobachtet. Darüber hinaus schafft die erfindungsgemäße Gießmasse die Möglichkeit, spezielle Mischungen zuzubereiten, deren Viskosität über einen Zeitraum sogar von mehreren Tagen konstant bleibt.

Zurückzuführen sind die vorstehend genannten Vorteile auf die Verwendung des oben beschriebenen Quarzsand-Produkts, das im Korn eine Umwandlung von weniger als 30 Gew. % Cristobalit an der Oberfläche, weiter bevorzugt von bis 25 Gew. % und besonders bevorzugt im Bereich von 3 bis 15 Gew. %, aufweist. Diese Materialien weisen von Haus aus einen bereits hervorragenden Weißgrad auf, der sich deutlich von dem eines natürlichen graubeigen Quarzsandes unterscheidet. Vielmehr weisen sie einen Weißgrad auf, der nahezu dem des Cristobalit-Sandes entspricht und der in jedem Fall ausreichend für die Herstellung sogenannter "weißer" Formteile ist.

Die Sirup-Zusammensetzung kann in weiten Grenzen variiert werden, wobei das Monomer vorzugsweise ein Acrylat- und/oder Methacrylatmonomeres und der gegebenenfalls verwendete Präpolymeranteil vorzugsweise aus demselben Material gebildet ist. Daneben eignen sich selbstverständlich auch viele Polyester- und andere Polymer-Verbindungen, wie sie bei der Herstellung von Formteilen für den Küchen- und Badbereich bekannt sind.

Ganz allgemein läßt sich eine Vielzahl von Gießmassen verwenden, wobei beispielhaft nur auf die DE-OS 24 49 656 verwiesen sei. Der Sirup enthält die für die Aushärtung der Gießmasse wichtigen Initiatoren, und auch hier kann auf die beiden vorgenannten Schriften des Standes der Technik verwiesen werden.

Für die vergleichende Betrachtung der Eigenschaften des α-Cristobalits, des erfindungsgemäß zu verwendenden Quarzsand-Produktes ACQ sowie eines Quarzes aus dem Stand der Technik (DE-A-22 41 712, im folgenden Dorfner-Quarz genannt) werden folgende Gießmassen-Rezepturen verwendet:
a) Zur Herstellung einer a-Cristobalit-Referenzprobe wird folgende Mischung hergestellt:
200 g PMMA (Type LP 51/03 der Firma Degussa) werden in 800 g technischen MMA (Firma Degussa) gelöst. Zu diesem "Präpolymersirup" werden 1670 g des Cristobalit-Sandes M72 gegeben. Danach werden noch 16 g eines üblichen peroxidischen Initiators (Bis(-t-butyl-cyclohexyl)peroxiddicarbonat) gegeben. Die Masse wird in üblicher Weise zwischen zwei Glasplatten im Wasserbad bei 60° C ausgehärtet, wobei der Abstand der Glasplatten 4 cm betragen hat. Von der ausgehärteten Probe (Zeitbedarf der Aushärtung ca. 30 Minuten) wird die Farbe der Probe mit einem handelsüblichen Farbmeßgerät (Minolta CR 200) bestimmt. Dazu wird das sogenannte LAB-System (Farbraum) nach DIN 55981 verwendet, und diese Probe wird als Bezugs größe zur Ermittlung des sogenannten Farbstichs s beim Vergleich mit den anderen Füllstoffproben verwendet.
Die Meßmethode nach DIN 55981 ergibt einen L-Wert als Grauwert, einen a-Wert als Rot-Grün-Wert, der im Falle positiver Werte einen Rotton anzeigt und im Falle von nega tiven a-Werten einen Grünton; b-Werte oder sogenannte Gelb-Blau-Werte, die als positiver b-Wert einen Gelbton anzeigen und bei negativem b-Wert einen Blauton.
Die Ergebnisse für die oben beschriebene Probe sind in der Tabelle II enthalten.

**Tabelle II**

| | α-Cristobalit | ACQ | Dorfner-Quarz | |
|---|---|---|---|---|
| thermischer Ausdehnungskoeffizient (30-100° C) | | | a) | b) |
| 10⁻⁶ (m/mK) | 50 | 13 | 12 | 12 |
| Dichte (g/cm³) | 2,3 | 2,6 | 2,6 | 2,6 |
| L-Wert | 86,7 | 71,8 | 74,4 | 81,18 |
| a-Wert | -0,60 | -0,09 | 1,97 | 1,27 |
| b-Wert | -0,50 | 1,08 | 5,31 | 5,13 |
| s-Wert | 0,80 | 1,1 | 5,7 | 5,3 |
| Kornform | kantengerundet, sehr rissige Struktur | rund, glatte Oberfläche | kantengerundet, glatte Oberfläche | kantengerundet, glatte Oberfläche |
| Schlagzähigkeit der PMMA-Probe | extrem schlecht | sehr gut - gut | sehr gut -gut | sehr gut -gut |
| Kratzfestigkeit | sehr gut | sehr gut | sehr gut | sehr gut |
| Fleckfestigkeit | schlecht | sehr gut | sehr gut | sehr gut |

Aus diesem Material hergestellte Küchenspülen haben folgende Eigenschaften:
Extrem schlechte Schlagzähigkeit, sehr gute Kratzfestigkeit, aber wiederum schlechte Fleckfestigkeit. Die hergestellten Gießmassen zeigen eine mit der Zeit stark ansteigende und über lange Zeit weiter ansteigende Viskosität.
b) ACQ-Probe und Dorfner-Quarz-Probe
Diese Rezeptur führt zu dem gleichen Volumengehalt eines Füllstoffs wie die vorgenannte Rezeptur, wobei die unter schiedliche Dichte des Quarzes von 2,6 gegenüber 2,3 von α-Cristobalit berücksichtigt wurde. 200 g PMMA (Type LP 51/03 der Firma Degussa) werden in 800 g technischem MMA (Firma Degussa) gelöst. Zu diesem "Präpolymersirup" werden 1887 g des erfindungsgemäß zu verwendenden Quarzsand-Produktes ACQ gegeben. Dazu werden 16 g eines üblichen peroxidischen Initiators (Bis-t-butylcyclohexyl)peroxidcarbonat) gegeben. Die Masse wird, wie bei Rezeptur a) beschrieben, zwischen zwei Glasplatten im Wasserbad bei 60° C ausgehärtet. Der Abstand der Glasplatten voneinander sowie die Aushärtezeit ist dieselbe wie bei der obigen Rezeptur.
Die Farbmeßwerte werden wie oben beschrieben bestimmt, wobei als Bezugsgröße für den Farbstich s nach DIN 55980 die Probe mit dem Cristobalit-Sand verwendet wird. Die Ergebnisse sind in der Tabelle II enthalten. Der Weißgrad der mit ACQ erhaltenen Probe ist zwar nicht exakt gleich wie der Weißgrad der in bezug genommenen α-Cristobalit-Probe, jedoch reichen bereits geringe Mengen eines üblichen Weißpigmentes, wie z.B. TiO₂ (z.B. Type 2200 der Firma Kronos Titan, Leverkusen), um den gewünschten Weißgrad zu erbringen.

Des weiteren wurde eine Probe mit Dorfner Quarz als Füllstoff hergestellt, wobei hier nach der Rezeptur b) verfahren wurde. Von dem Dorfner Quarz wurden zwei verschiedene Fraktionen unterschiedlicher Körnung verwendet, wobei die erste Fraktion den Typ Weiß 1/8 mit einer Körnung zwischen 300 und 800 µm darstellt und mit einem in ein anorganisches Bindemittel eingebundenen Weißpigment beschichtet ist (erhältlich von der Firma Gebrüder Dorfner, Hirschau, Deutschland). Die gemessenen Farbwerte sind in der Tabelle II aufgelistet.

Darüber hinaus wurde der Typ 2/9 mit einer Körnung von 200 bis 500 µm, beschichtet mit einem in ein anorganisches Bindemittel eingebundenen Weißpigment (Hersteller Firma Gebrüder Dorfner, Hirschau/Deutschland), verwendet, die dabei gefundenen Farbwerte sind wiederum in Tabelle II aufgelistet. Beiden Dorfner-Quarzproben ist gemeinsam, daß sie einen Farbstich nach Orange aufweisen, der sehr deutlich ist, obwohl die Körner jeweils mit einem in ein anorganisches Bindemittel eingebundenen Weiß-Pigment bereits beschichtet sind.

Das erfindungsgemäß zu verwendende Quarzsand-Produkt ACQ andererseits ergibt lediglich einen geringen Grauwert und das, ohne daß das Quarzsand-Produkt mit einem in ein anorganisches Bindemittel eingebundenen Weiß-Pigment zu beschichten wäre. Die zuvor angesprochenen Zusätze von Weißpigmenten, wie z.B. TiO₂, sind lediglich der Gießmasse zuzugeben, was sehr einfach bei der Abmischung der Gießmasse geschehen kann.

Bei den Dorfner-Quarzproben läßt sich der Farbstich unter Verwendung von handelsüblichen Weißpigmenten nicht aufheben, so daß diese Proben stets einen Rotstich aufweisen. "Weiße" Formteile im Sinne der Erfindung sind mit diesem Quarzprodukt nicht erhältlich.

Mit den erfindungsgemäßen Quarzsand-Produkten ACQ sind ohne weiteres Abmischungen in der Gießmasse mit einem Füllgrad von bis zu 75 Gew. % und mehr möglich, und diese Gießmassen lassen sich immer noch sehr gut in übliche Formhohlkörper, wie z.B. für die Herstellung von Küchenspülen, füllen.

Überraschenderweise wurde gefunden, daß bei Verwendung des erfindungsgemäß zu verwendenden Quarzsand-Produktes als Füllstoff ohne wesentliche Beeinträchtigung der Eigenschaften der Gießmasse ein Teil des Füllstoffes, und zwar bis zu 50 Vol. % des Füllstoffes, aus α-Cristobalit-Sand bestehen kann, ohne daß die erfindungsgemäß positiven Eigenschaften der Gießmasse wieder aufgehoben werden. Bevorzugt werden jedoch Gießmassenmischungen, bei denen der Füllstoffanteil der Mischung deutlich weniger als 50 Vol. % α-Cristobalit-Sand aufweist, typischerweise zwischen 10 und 30 Vol. %, besonders bevorzugt zwischen 10 und 20 Vol. %.

Eine 50:50 Mischung (Vol/Vol) von Cristobalit-Sand und erfindungsgemäßem Quarzsand-Produkt führt auch bei einem sehr hohen Füllgrad dieser Füllstoffmischung von 73 Gew. % in einer Kunststoffdispersion, wie sie oben in den Rezepturen a) und b) angegeben wurde, lediglich zu einer Viskosität von anfänglich 54 Pa*s, die im Verlauf von 72 Stunden, d.h. also über 2 1/2 Tage hinweg, lediglich auf 68 Pa*s ansteigt und damit immer noch gut verarbeitbar bleibt.

Zur Darlegung des Viskositätseffekts der verschiedenen Füllstofftypen wurden folgende Siruprezepturen verwendet:

200 PMMA werden, wie oben in den Rezepturen a) und b), in 800 g MMA gelöst (= Präpolymersirup). Dieser Sirup wird unter Zugabe von weiterem MMA auf eine Viskosität von 130 mPa*s eingestellt. Die Viskosität wird mit einem Gerät des Typs VT 500 der Firma Haake, Karlsruhe, Deutschland, gemessen, unter Verwendung des Drehkörpers MV-DIN unter Verwendung eines Tauchrohres in der Meßstufe 5.

Zu diesem Präpolymersirup werden die in der Tabelle angegebenen Füllstoffe und Füllstoffgehalte zugegeben und gut verrührt. Danach werden bei den in der Tabelle angegebenen Zeiten die Viskositätsmessungen, wie oben beschrieben, wiederholt. In den Beispielen wurden folgende Volumengehalte in der Gießmasse verwendet:

42 Vol. % Füllstoffgehalt in der Gießmasse, was einem Volumengehalt von 47 Vol. % im ausgehärteten Formteil entspricht. Diese Änderung im Volumengehalt reflektiert den Schrumpf, der durch die Polymerisationsreaktion des Monomeren eintritt. Die Dichte des Präpolymersirups beträgt ca. 1,0, die Dichte des ausgehärteten Polymers ca. 1,2. Die Dichte von Cristobalit beträgt 2,3 und die Dichte von Quarz 2,6.

| Zugabemengen: | |
|---|---|
| M72 Cristobalit | 1670 g; Volumengehalt 42 % (Füllgrad 62 Gew. %) |
| ACQ-Quarzsand-Produkt | 1887 g; Volumengehalt 42 % (Füllgrad 65 Gew. %) |
| M72/ACQ (50:50) | 1778 g; Volumengehalt 42 % (Füllgrad 64 Gew. %) |

Für Volumengehalte in der Gießmasse von 50 % erhält man einen entsprechenden Volumengehalt von 55 % im ausgehärteten Formteil. Für diese Proben wurden folgende Zugabemengen verwendet:

| | |
|---|---|
| M72 | 2330 g; Volumengehalt 50 % (Füllgrad 69 Gew. %) |
| ACQ | 2637 g; Volumengehalt 50 % (Füllgrad 72 Gew. %) |
| M72/ACQ (50:50) | 2485 g; Volumengehalt 50 % (Füllgrad 71 Gew. %) |

Für Volumengehalte in der Gießmasse von 53 % erhält man einen entsprechenden Volumengehalt des Füllstoffs im ausgehärteten Formteil von 58 %. Folgende Mengen wurden dem Sirup zugegeben:

| | |
|---|---|
| M72 | 2500 g; Volumengehalt 53 % (Füllgrad 72 Gew. %) |
| ACQ-Quarzsand-Produkt | 2950 g; Volumengehalt 53 % (Füllgrad 75 Gew. %) |
| M72/ACQ (50:50) | 2725 g; Volumengehalt 53 % (Füllgrad 73 Gew. %) |

**TABELLE III**

| Probe | Volumengehalt | sof. | 1h | 4h | 72h |
|---|---|---|---|---|---|
| M 72 | 42 | 15,7 | 20 | 23 | 38 |
| ACQ | 42 | 15,2 | 15,2 | 15,4 | 15,8 |
| M72/ACQ | 42 | 15,6 | 18 | 20 | 23 |
| | | | | | |
| ACQ | 50 | 21 | 22 | 22 | 23 |
| M72/ACQ | 50 | 23 | 27 | 31 | 38 |
| M72 | 50 | 33 | 43 | 50 | -- |
| | | | | | |
| ACQ | 53 | 38 | 38 | 40 | 42 |
| M72 | 53 | 72 | 88 | -- | -- |
| M72/ACQ | 53 | 54 | 58 | 62 | 68 |

Die Auswertung der in der Tabelle III aufgelisteten Testdaten ergibt folgendes:
1. Die Viskosität bei der ACQ-Probe bleibt über längere Zeit konstant.
2. Die Viskosität bei M72-Füllstoff steigt über längere Zeit und sehr stark, so daß höhere Volumengehalte zu Gießmassen führen, die nicht mehr verarbeitbar sind.
3. Durch Einsatz von ACQ-Produkt ist es möglich, Mischungen mit hohen Volumenkonzentrationen auch unter Beimischung von M72 herzustellen (in den Beispielen Volumenverhältnis ACQ/M72 50:50).

### Eigenschaften von Formteilen, die unter Verwendung der erfindungsgemäßen Gießmasse hergestellt sind:

Zur Prüfung der Fleckfestigkeit solcher Formteile wurde wie folgt vorgegangen:

Aus 7,8 kg MMA, 2 kg PMMA (Bezugsquelle in beiden Fällen wie zuvor) wurden 200 g TRIM als Vernetzer (Bezugsquelle: Firma Degussa) zugegeben. Dazu wurden 10 g eines üblichen Formtrennmittels (z.B. Stearinsäure der Firma Merck, Deutschland) und 16,7 kg Füllstoff M72 bzw. 18,9 kg ACQ, welche beide in üblicher Weise silanisiert sind, zugegeben. Schließlich wurden 150 g eines üblichen peroxidischen Initiators, z.B. Bis-t-butyl(cyclohexyl)-peroxiddicarbonat verwendet (z.B. Typ BCHPC der Firma Peroxidchemie, Höllriegelskreuth, Deutschland). Aus diesen Sirupen wurde in üblicher Weise ein Formteil gegossen, und aus dem erhaltenen Formteil wurde aus dem Beckenboden eine Probe der Größe 10 x 10 cm herausgeschnitten. Die Dicke der Probe betrug ca. 1 cm.

Ein haushaltsüblicher Abrieb wurde simuliert, wobei hierzu die Proben geschliffen wurden (Probengröße 50 x 50 mm aus dem Bekkenbodenprobenteil). Dazu wird eine handelsübliche Schleif- und Poliermaschine benutzt, die Probe wird mit einem Gewicht von 15 kg belastet, als Schleifmittel wird das Mittel Loh-Schmirgel LS 9 der Firma Loh in 35573 Wetzlar, Deutschland, benutzt. Der Schleifvorgang wird ca. 10 Minuten fortgesetzt, danach sind ca. 0,2 bis 0,3 cm von der Probe abgetragen.

Danach wird die Probe mit einem neuen handelsüblichen Filzstift (Edding 3000 der Firma edding AG, Farbe Nr. 1) beaufschlagt, die Farbe während 60 Minuten eingetrocknet gelassen. Anschließend wird mit einem weichen Tuch unter Verwendung von Reinigungsalkohol (Ethanol) abgewischt (10 Wischvorgänge, wobei nach 5 Wischvorgängen ein neues Tuch verwendet wird). Die Probe wird visuell und unter dem Mikroskop beurteilt. Ziel ist es, eine möglichst fleckfreie Oberfläche zurückzuerhalten.

Deshalb wird die Zahl der unter dem Mikroskop sichtbaren schwarzen Flecken (Vergrößerung 6,5fach) bestimmt.

Die Ergebnisse sind wie folgt:

### M72-gefüllte Probe:

Visuelle Beurteilung: starke Vergrauung der Probe im Bereich der Beaufschlagung mit Filzstift.

### Mikroskopie:

Anzahl der Flecken: ca. 90 pro Flächeneinheit
Visuelle Beurteilung unter dem Mikroskop: Die Flecken befinden sich im Bereich des Füllstoffes, der offensichtlich Farbmittel des Filzstiftes aufnehmen kann.

### ACQ-Füllstoff:

Visuelle Beurteilung: relativ geringe Vergrauung der Probe im Bereich des Filzstiftauftrags

### Mikroskopie: 6 Flecken

Visuelle Beurteilung unter dem Mikroskop: Die Flecken treten dort auf, wo durch das Schleifen Füllstoffpartikel herausgerissen wurden und kleine Vertiefungen gebildet wurden. Ein Einfärben des Füllstoffs wird nicht beobachtet.

Darüber hinaus wurde mit den Proben ein Heiß/Kalt-Wechselbeanspruchungstest durchgeführt.

Hierzu wurden jeweilige, nach obiger Rezeptur hergestellte Spülen ca. 3 Minuten mit 15° C kaltem Wasser bei einer Flußmenge von 3 l/min am Beckenboden der Spüle beaufschlagt; dann wird unmittelbar im Anschluß daran 3 Minuten 90° C heißes Wasser bei einem Fluß von 3 l/min auf dieselbe Stelle des Beckenbodens der Spüle gelenkt. Das Wasser wird jeweils direkt durch die Ausgußöffnung abfließen gelassen. Dies entspricht einem Zyklus. Bewertet wird die Anzahl der Zyklen, bis ein deutlicher Riß im Beckenboden auftritt. Die Ergebnisse sind wie folgt:

| | |
|---|---|
| M72-Probe | 800 Zyklen |
| M72/ACQ-Probe | 2700 Zyklen |
| ACQ-Probe | 4200 Zyklen |

Die gute Rißbeständigkeit wird auf die im wesentlichen glatte, nicht rissige Kornform zurückgeführt. Die Risse bei ungeeigneten Füllstoffen führen offensichtlich neben der erhöhten Bindemittelaufnahme zu einer Sollbruchstelle, so daß Risse wesentlich eher entstehen können.

## Patentansprüche

1. Gießmasse zur Herstellung weißer Formkörper, enthaltend einen aushärtbaren Sirup, welcher ein flüssiges Monomeres und gegebenenfalls darin gelöste Präpolymeranteile enthält, und einen anorganischen Füllstoff, dadurch gekennzeichnet, daß der anorganische Füllstoff ein Quarzsand-Produkt umfaßt, dessen einzelnes Korn im Kern im wesentlichen aus Quarz und an der Oberfläche im wesentlichen aus α-Cristobalit besteht.

2. Gießmasse nach Anspruch 1, dadurch gekennzeichnet, daß der Anteil des α-Cristobalits am Gesamtkorn im Mittel etwa 1 bis etwa 25 Gew. % beträgt.

3. Gießmasse nach Anspruch 2, dadurch gekennzeichnet, daß der Anteil des α-Cristobalits am Gesamtkorn im Mittel ca. 3 bis ca. 15 Gew. %, insbesondere ca. 10 Gew. %, beträgt.

4. Gießmasse nach einem der Ansprüche 1 bis 3, dadurch gekennzeichnet, daß die Kornoberfläche weitgehend unversehrt und glatt ist.

5. Gießmasse nach einem der Ansprüche 1 bis 4, dadurch gekennzeichnet, daß die Kornform des Quarzsand-Produktes eine im wesentlichen ungebrochene Kornform ist.

6. Gießmasse nach einem der voranstehenden Ansprüche, dadurch gekennzeichnet, daß das Quarzsand-Produkt eine Korngrößenverteilung mit dem Schwerpunkt im Bereich von 100 µm bis 500 µm aufweist.

7. Gießmasse nach einem der voranstehenden Ansprüche, dadurch gekennzeichnet, daß das Quarzsand-Produkt einen Weißgrad L > 60 aufweist, gemessen nach DIN 55981.

8. Gießmasse nach einem der voranstehenden Ansprüche, dadurch gekennzeichnet, daß das Quarzsand-Produkt einen a-Wert von betragsmäßig ≤ 0,6, vorzugsweise ≤ 0,2, aufweist, gemessen nach DIN 55981.

9. Gießmasse nach Anspruch 7 oder 8, dadurch gekennzeichnet, daß der b-Wert betragsmäßig ≤ 2, vorzugsweise ≤ 1,2, beträgt, gemessen nach DIN 55981.

10. Gießmasse nach einem der voranstehenden Ansprüche, dadurch gekennzeichnet, daß das Korn des Quarzsand-Produktes silanisiert ist.

11. Gießmasse nach einem der voranstehenden Ansprüche, dadurch gekennzeichnet, daß das durch partielle Umwandlung von Quarzsand erhaltene Quarzsand-Produkt lediglich bis zu einem solchen Grad umgewandelt ist, bei dem das von außen zugängliche Kapillar- und Porenvolumen auf einen Wert beschränkt bleibt, der einer Wasseraufnahme von 40 g pro 100 g Quarzsand-Produkt oder weniger entspricht.

12. Gießmasse nach einem der voranstehenden Ansprüche, dadurch gekennzeichnet, daß der anorganische Füllstoff einen Anteil von 40 bis 90 Gew. % an der Masse aufweist.

13. Gießmasse nach Anspruch 12, dadurch gekennzeichnet, daß der anorganische Füllstoff zumindest zu 50 Vol. % aus einem Quarzsand-Produkt gemäß den Definitionen der Ansprüche 1 bis 11 besteht.

14. Gießmasse nach einem der voranstehenden Ansprüche, dadurch gekennzeichnet, daß der anorganische Füllstoff im wesentlichen aus dem Quarzsand-Produkt gemäß einem der Ansprüche 1 bis 11 besteht.

15. Formkörper, hergestellt unter Verwendung einer Gießmasse nach einem der Ansprüche 1 bis 14.

16. Formkörper nach Anspruch 15, dadurch gekennzeichnet, daß der Formkörper eine Küchenspüle, eine Arbeitsplatte für den Küchen- oder Badbereich oder ein Sanitärteil ist.

## Claims

1. A casting composition for producing white moulded articles comprising a curable syrup which contains a liquid monomer and optionally prepolymer components dissolved therein, and an inorganic filler, characterised in that the inorganic filler includes a quartz sand product, an individual grain of which consists in the core essentially of quartz and at the surface essentially of α-cristobalite.

2. A casting composition according to claim 1, characterised in that the proportion of the α-cristobalite in the total grain is on average approximately 1 to approximately 25% by weight.

3. A casting composition according to claim 2, characterised in that the proportion of the α-cristobalite in the total grain is on average approximately 3 to approximately 15% by weight, in particular approximately 10% by weight.

4. A casting composition according to any one of claims 1 to 3, characterised in that the grain surface is substantially intact and smooth.

5. A casting composition according to any one of claims 1 to 4, characterised in that the grain shape of the quartz sand product is an essentially unbroken grain shape.

6. A casting composition according to any one of the preceding claims, characterised in that the quartz sand product has a grain size distribution with predominance in the range of 100µm to 500µm.

7. A casting composition according to any one of the preceding claims, characterised in that the quartz sand product has a whiteness L > 60, measured in accordance with DIN 55981.

8. A casting composition according to any one of the preceding claims, characterised in that the quartz sand product has as a-value the absolute value ≤ 0.6, preferably ≤ 0.2, measured in accordance with DIN 55981.

9. A casting composition according to claim 7 or 8, characterised in that the b-value has an absolute value of ≤ 2, preferably ≤ 1.2, measured in accordance with DIN 55981.

10. A casting composition according to any one of the preceding claims, characterised in that the grain of the quartz sand product is silanized.

11. A casting composition according to any one of the preceding claims, characterised in that the quartz sand product obtained by partial conversion of quartz sand is only converted to such a degree that the capillary and pore volume accessible from outside remains limited to a value which corresponds to a water absorption of 40g per 100g quartz sand product or less.

12. A casting composition according to any one of the preceding claims, characterised in that the inorganic filler comprises a proportion of 40 to 90% by weight of the composition.

13. A casting composition according to claim 12, characterised in that the inorganic filler consists at least to 50% by volume of a quartz sand product in accordance with the definitions of claims 1 to 11.

14. A casting composition according to any one of the preceding claims, characterised in that the inorganic filler consists essentially of the quartz sand product according to any one of claims 1 to 11.

15. A moulded article, produced using a casting composition according to any one of claims 1 to 14.

16. A moulded article according to claim 15, characterised in that the moulded article is a kitchen sink, a worktop for the kitchen or bathroom or sanitary ware.

## Revendications

1. Composé de moulage pour la fabrication d'éléments moulés blancs, comprenant un sirop pouvant durcir, lequel contient un monomère liquide et, le cas échéant, une partie prépolymère dissoute dedans, ainsi qu'un matériau de charge inorganique, caractérisé en ce que le matériau de charge inorganique comprend un produit à base de sable quartzeux dont chaque grain individuel est formé en son centre essentiellement de quartz et à sa surface essentiellement de cristobalite α.

2. Composé de moulage selon la revendication 1, caractérisé en ce que la proportion de cristobalite α par rapport à l'ensemble du grain est en moyenne d'environ 1 à environ 25 % en poids.

3. Composé de moulage selon la revendication 2, caractérisé en ce que la proportion de cristobalite α par rapport à l'ensemble du grain est en moyenne d'environ 3 à environ 15 % en poids, en particulier d'environ 10 % en poids.

4. Composé de moulage selon l'une des revendications 1 à 3, caractérisé en ce que la surface du grain est pour l'essentiel intacte et lisse.

5. Composé de moulage selon l'une des revendications 1 à 4, caractérisé en ce que la forme du grain du produit à base de sable quartzeux est une forme de grain pour l'essentiel sans cassure.

6. Composé de moulage selon l'une des revendications précédentes, caractérisé en ce que le produit à base de sable quartzeux a une répartition de la taille des grains avec une valeur de pointe dans le domaine de 100 µm à 500 µm.

7. Composé de moulage selon l'une des revendications précédentes, caractérisé en ce que le produit à base de sable quartzeux présente un degré de blanc L > 60, mesuré selon la norme DIN 55981.

8. Composé de moulage selon l'une des revendications précédentes, caractérisé en ce que le produit à base de sable quartzeux présente une valeur a ≤ 0,6 en se basant sur la valeur, de préférence ≤ 0,2, mesuré selon la norme DIN 55981.

9. Composé de moulage selon la revendication 7 ou 8, caractérisé en ce que la valeur b est ≤ 2 en se basant sur la valeur, de préférence ≤ 1,2, mesuré selon la norme DIN 55981.

10. Composé de moulage selon l'une des revendications précédentes, caractérisé en ce que le grain du produit à base de sable quartzeux est silanisé.

11. Composé de moulage selon l'une des revendications précédentes, caractérisé en ce que le produit à base de sable quartzeux obtenu par transformation partielle de sable quartzeux, est transformé uniquement jusqu'à un degré tel que le volume des capillaires et des pores accessibles de l'extérieur demeure limité à une valeur qui correspond à une absorption d'eau de 40 g pour 100 g de produit à base de sable quartzeux, ou moins.

12. Composé de moulage selon l'une des revendications précédentes, caractérisé en ce que le matériau de charge inorganique présente une proportion de 40 à 90 % en poids par rapport à la masse.

13. Composé de moulage selon la revendication 12, caractérisé en ce que le matériau de charge inorganique est composé pour au moins 50 % en volume d'un produit à base de sable quartzeux selon les définitions des revendications 1 à 11.

14. Composé de moulage selon l'une des revendications précédentes, caractérisé en ce que le matériau de charge inorganique est composé pour l'essentiel du produit à base de sable quartzeux selon l'une des revendications 1 à 11.

15. Pièce moulée fabriquée en utilisant un composé de moulage selon l'une des revendications 1 à 14.

16. Pièce moulée selon la revendication 15, caractérisée en ce que la pièce moulée est un évier de cuisine, un plan de travail pour le domaine de la cuisine ou de la salle de bains, ou un élément de sanitaires.
